# FASCICULE DE BREVET EUROPEEN

(11) **EP 4 497 678 B1**
(45) Date de publication et mention de la délivrance du brevet: **18.03.2026**
(21) Numéro de dépôt: 24188739.7
(22) Date de dépôt: 16.07.2024
(51) Int. Cl.: B64C 23/00, B64D 29/02, B64D 33/04

(54) **AÉRONEF COMPRENANT AU MOINS UN DÉFLECTEUR CONFIGURÉ POUR ÉCARTER UN CÔNE D ÉJECTION DE GAZ SORTANT D'UN ENSEMBLE DE PROPULSION D'UN BORD DE FUITE D'UNE VOILURE**
FLUGZEUG MIT MINDESTENS EINEM DEFLEKTOR, DER SO KONFIGURIERT IST, DASS ER EINEN GASAUSSTOSSKEGEL, DER AUS EINER ANTRIEBSEINHEIT AUSTRITT, VON EINER HINTERKANTE EINES FLÜGELS FERNHÄLT
AIRCRAFT COMPRISING AT LEAST ONE DEFLECTOR CONFIGURED TO DEFLECT A GAS EJECTION CONE EXITING FROM A PROPULSION ASSEMBLY AWAY FROM A TRAILING EDGE OF A WING

(30) Priorité: 27.07.2023 FR 2308114
(43) Date de publication de la demande: 29.01.2025
(73) Titulaire: AIRBUS OPERATIONS (S.A.S.), 31060 Toulouse (FR); AIRBUS Operations GmbH, 21129 Hamburg (DE)
(72) Inventeur: HANKE, Jean-Marc, 21129 Hambourg (DE); GURUNATHAN, Sentamil Selvan, 21129 Hambourg (DE); HUBER, Jérôme, 31060 Toulouse (FR); FARGIER, Thierry, 31060 Toulouse (FR); GALDEANO, Stéphane, 31060 Toulouse (FR); ROMEO, Jean-Paul, 31060 Toulouse (FR)
(74) Mandataire: Fantin, Laurent

(56) Documents cités:
- US-A1- 2012 001 022
- US-A1- 2014 290 270
- US-A1- 2016 040 627

## Description

La présente demande se rapporte à un aéronef comprenant au moins un déflecteur configuré pour écarter un cône d'éjection de gaz sortant d'un ensemble de propulsion d'un bord de fuite d'une voilure.

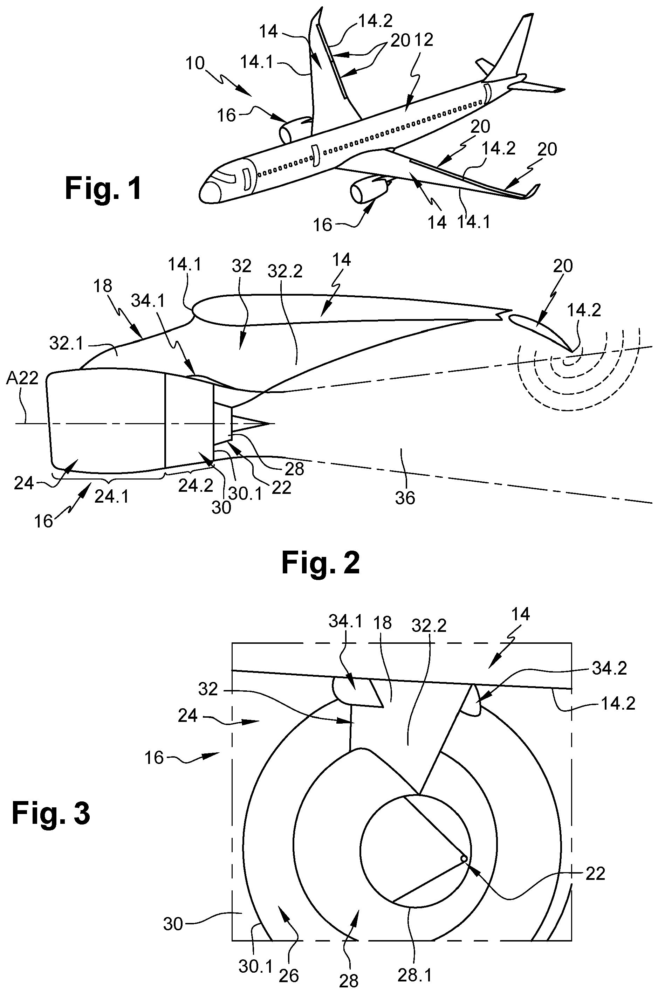

Selon un mode de réalisation visible sur la figure 1, un aéronef 10 comprend un fuselage 12, une voilure 14 ainsi que des ensembles de propulsion 16 positionnés sous la voilure 14 et reliés à cette dernière par des mâts 18.

Comme illustré sur la figure 2, la voilure 14 s'étend entre un bord d'attaque 14.1 et un bord de fuite 14.2. La voilure 14 comprend, au niveau de son bord de fuite 14.2, au moins un volet hypersustentateur 20 pivotant, mobile entre une première position dans laquelle le volet hypersustentateur 20 est situé dans le prolongement de la voilure 14 ainsi qu'une deuxième position abaissée dans laquelle le bord de fuite 14.2 est décalé vers le bas de manière à augmenter la portance de la voilure 14.

Selon un mode de réalisation de l'art antérieur, comme illustré sur les figures 2 et 3, chaque ensemble de propulsion 16 comprend une motorisation 22 ainsi qu'une nacelle 24 entourant la motorisation 22 de manière à délimiter, avec la motorisation 22, un conduit d'air secondaire 26.

Pour la présente demande, une direction longitudinale est parallèle à l'axe A22 de la motorisation 22. Les termes avant et arrière font référence au sens d'écoulement du flux d'air dans la motorisation 22 en fonctionnement, le flux d'air s'écoulant de l'avant vers l'arrière. Les termes supérieur et inférieur font référence à une position selon un axe vertical, un élément supérieur étant plus écarté du sol qu'un élément inférieur lorsque l'aéronef est au sol.

La motorisation 22 comprend, en partie arrière, une première tuyère 28 via laquelle est éjecté un flux d'air primaire traversant la motorisation 22. La nacelle 24 comprend, en partie arrière, une deuxième tuyère 30 via laquelle est éjecté le flux d'air secondaire canalisé par le conduit d'air secondaire 26. Selon une configuration, la première tuyère 28 présente un premier bord de fuite 28.1 décalé vers l'arrière par rapport au deuxième bord de fuite 30.1 de la deuxième tuyère 30.

Chaque mât 18 comprend une structure primaire rigide, qui assure entre autres la transmission des efforts entre la motorisation 22 et la voilure 14, ainsi qu'une structure secondaire 32 qui enveloppe la structure primaire et limite la traînée du mât 18.

Cette structure secondaire 32 comprend, de part et d'autre d'un plan médian PM, un carénage avant 32.1, positionné à l'avant de la voilure 14, ainsi qu'un carénage arrière 32.2, appelé carénage aérodynamique arrière inférieur ou APF (« Aft Pylon Fairing » en anglais), positionné à l'arrière de la nacelle 24. Cette structure secondaire 32 s'étend dans le conduit d'air secondaire 26 entre la motorisation 22 et nacelle 24.

Chaque ensemble de propulsion 16 comprend un dispositif d'inversion de poussée. A cet effet, la nacelle 24 comprend une partie avant 24.1 et une partie arrière 24.2 mobile entre une position désactivée dans laquelle la partie arrière 24.2 est accolée à la partie avant 24.1 ainsi qu'une position activée dans laquelle la partie arrière 24.2 est écartée de la partie avant 24.1 de sorte à générer une ouverture latérale entre les parties avant et arrière 24.1, 24.2. En complément, le dispositif d'inversion de poussée comprend un système de guidage et de déplacement configuré pour guider et déplacer la partie arrière 24.2 par rapport à la partie avant 24.1.

Ce système de guidage et de déplacement présentant des parties en saillie par rapport au carénage arrière 32.2, le mât 18 comprend deux carénages arrière secondaires 34.1, 34.2 positionnées de part et d'autre du carénage arrière 32.2 en saillie par rapport à ce dernier. Comme illustré sur la figure 2, ces carénages arrière secondaires 34.1, 34.2 comprennent des parties décalées vers l'arrière par rapport au deuxième bord de fuite 30.1 de la deuxième tuyère 30, situées dans le prolongement de cette deuxième tuyère 30. Ces carénages arrière secondaires 34.1, 34.2 n'interfèrent pas avec le flux d'air secondaire sortant de la deuxième tuyère 30.

En fonctionnement, les flux d'air sortant des première et deuxième tuyères 28, 30 forment un cône d'éjection 36 à l'arrière de l'ensemble de propulsion 16 dont l'angle augmente en s'écartant de ce dernier.

Dans certaines circonstances, notamment lorsque le volet hypersustentateur 20 est en position abaissée (lors des phases de décollage et d'atterrissage), le cône d'éjection 36 se rapproche ou interfère avec le bord de fuite 14.2 de la voilure 14, comme illustré sur la figure 2, ce qui génère des bruits d'origine aérodynamique.

Pour améliorer leurs performances, les ensembles de propulsion ont des diamètres de plus en plus importants. Par conséquent, le cône d'éjection des gaz sortant de tels ensembles de propulsion est de plus en plus proche de la voilure 14, ce qui tend à augmenter les bruits d'origine aérodynamique, notamment lors de la phase de décollage.

Les systèmes connus dans l'état de la technique comprennent les documents suivants : Le document US 2012001022 A1 décrit un déflecteur de flux pour un moteur à réaction supporté sous une aile d'un avion. Le déflecteur de flux comprend une ou plusieurs ailettes qui interagissent avec un champ d'écoulement libre provenant d'un moteur à réaction afin de dévier une couche de cisaillement vers le bas, afin d'éviter toute interaction avec un volet sur l'aile. US 2014290270 A1 décrit un pylône destiné à fixer un moteur à turbine, le pylône étant configuré pour relier le moteur à un élément structurel d'un avion. Sur chacune de ses faces latérales, le pylône comprend une série de déflecteurs espacés transversalement les uns des autres et qui définissent entre eux des canaux convergents et courbes configurés pour accélérer les flux d'air circulant à l'intérieur des canaux lors du décollage ou en vol de l'avion afin de dévier les flux d'air vers un jet du moteur. Le document US 2016040627 A1 décrit un moteur à turbine à gaz comprenant un carénage aérodynamique adjacent à une tuyère convergente-divergente. Le carénage aérodynamique comprend une courbure localisée le long d'un bord extérieur. Le carénage aérodynamique est configuré pour compenser un gradient de pression circonférentiel qui serait autrement introduit en partie par une transition entre la tuyère convergente-divergente et le carénage aérodynamique.

La présente invention vise à remédier à tout ou partie des inconvénients de l'art antérieur.

A cet effet, l'invention a pour objet un aéronef comprenant une voilure, au moins un ensemble de propulsion ainsi que, pour chaque ensemble de propulsion, un mât reliant l'ensemble de propulsion et la voilure. L'ensemble de propulsion comporte un dispositif d'inversion de poussée, un axe de motorisation ainsi qu'au moins une tuyère qui présente un bord de fuite et une face intérieure s'étendant jusqu'au bord de fuite et inclinée par rapport à l'axe de motorisation. Le mât comporte au moins des carénages latéraux droit et gauche positionnés de part et d'autre d'un plan médian ainsi qu'au moins un carénage arrière secondaire comportant, décalées vers l'arrière par rapport au bord de fuite de la tuyère, une face inférieure, une face supérieure ainsi qu'au moins une arête reliant les faces inférieure et supérieure, qui présente une extrémité arrière et un point écarté du plan médian situé au niveau du bord de fuite de la tuyère.

Selon l'invention, la face inférieure du carénage arrière secondaire forme, avec la face intérieure de la tuyère, un angle compris entre 2 et 20°, la face inférieure du carénage arrière secondaire et l'axe de motorisation formant un angle supérieur à celui formé entre la face intérieure de la tuyère et l'axe de motorisation, chaque carénage arrière secondaire étant configuré pour loger au moins un équipement du dispositif d'inversion de poussée.

Selon cet agencement, le carénage arrière secondaire forme un déflecteur qui interfère avec le cône d'éjection des gaz sortant de l'ensemble de propulsion de manière à l'écarter du bord de fuite de la voilure. Cette solution permet de réduire les bruits d'origine aérodynamique. Selon une autre caractéristique, l'angle formé entre la face inférieure du carénage arrière secondaire et la face intérieure de la tuyère est de l'ordre de 12°.

Selon une autre caractéristique, le mât comprend des carénages arrière secondaires droit et gauche respectivement en saillie par rapport aux carénages latéraux droit et gauche.

Selon une autre caractéristique, la tuyère présente un diamètre de sortie mesuré au niveau du bord de fuite. En complément, chaque carénage arrière secondaire présente une longueur en déport, correspondant à une distance séparant l'extrémité arrière et le bord de fuite de la tuyère, comprise entre 25 et 100% du diamètre de sortie de la tuyère.

Selon une autre caractéristique, la longueur en déport est sensiblement égale à 50% du diamètre de sortie de la tuyère.

Selon une autre caractéristique, la tuyère présente un diamètre de sortie mesuré au niveau du bord de fuite. En complément, chaque carénage arrière secondaire présente une largeur comprise entre 4 à 20% du diamètre de sortie de la tuyère.

Selon une autre caractéristique, la largeur est sensiblement égale à 11% du diamètre de sortie de la tuyère.

Selon une autre caractéristique, la tuyère présente une superficie de sortie mesurée au niveau du bord de fuite. En complément, la face inférieure de chaque carénage arrière secondaire présente une superficie comprise entre 2 et 10% de la superficie de sortie de la tuyère. Selon une autre caractéristique, la superficie de la face inférieure de chaque carénage arrière secondaire est sensiblement égale à 4% de la superficie de sortie de la tuyère.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un aéronef,
- La figure 2 est une vue latérale schématique d'un ensemble de propulsion illustrant un mode de réalisation de l'art antérieur,
- La figure 3 est une vue en perspective d'un ensemble de propulsion illustrant un mode de réalisation de l'art antérieur,
- La figure 4 est une vue latérale schématique d'un ensemble de propulsion illustrant un mode de réalisation de l'invention,
- La figure 5 est une vue en perspective d'un ensemble de propulsion illustrant un mode de réalisation de l'invention,
- La figure 6 est une vue de dessus schématique d'une partie arrière d'un ensemble de propulsion équipé d'un carénage arrière secondaire illustrant un mode de réalisation de l'invention,
- La figure 7 est une vue de côté schématique d'un carénage arrière secondaire illustrant un mode de réalisation de l'invention,
- La figure 8 est une représentation schématique comparant une face intérieure d'un carénage arrière secondaire selon un mode de réalisation de l'art antérieur et selon un mode de réalisation de l'invention,
- La figure 9 est un diagramme illustrant des courbes de mesure des bruits d'origine aérodynamique en présence d'un carénage arrière secondaire selon un mode de réalisation de l'art antérieur et selon un mode de réalisation de l'invention.

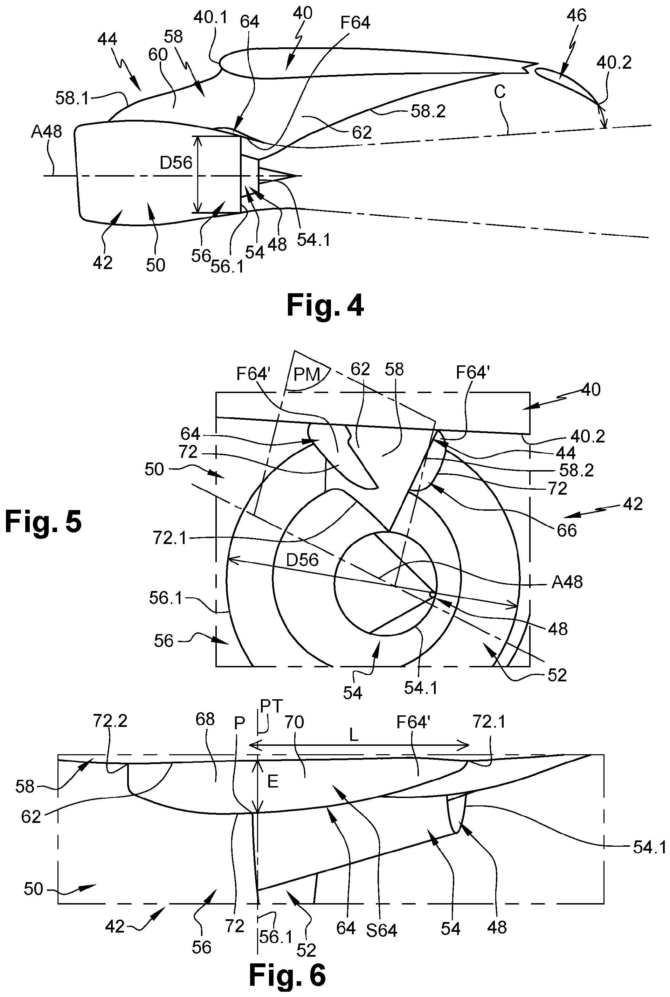

Selon un mode de réalisation visible sur les figures 4 et 5, un aéronef comprend un fuselage, une voilure 40 ainsi qu'au moins un ensemble de propulsion 42 qui comprend un mât 44 pour le relier à la voilure 40.

Comme illustré sur la figure 4, la voilure 40 s'étend entre un bord d'attaque 40.1 et un bord de fuite 40.2. Elle comprend, au niveau de son bord de fuite 40.2, au moins un volet hypersustentateur 46 pivotant, mobile entre une première position dans laquelle le volet hypersustentateur 46 est positionné dans le prolongement de la voilure 40 ainsi qu'une deuxième position abaissée dans laquelle le bord de fuite 40.2 est décalé vers le bas de manière à augmenter la portance de la voilure 40.

Comme illustré sur la figure 5, chaque ensemble de propulsion 42 comprend une motorisation 48 ainsi qu'une nacelle 50 entourant la motorisation 48 de manière à délimiter, avec la motorisation 48, un conduit d'air secondaire 52. La motorisation 48 présente un axe de motorisation A48.

La motorisation 48 comprend, en partie arrière, une première tuyère 54, via laquelle est éjecté un flux d'air primaire, qui présente un premier bord de fuite 54.1. La nacelle 50 comprend, en partie arrière, une deuxième tuyère 56 via laquelle est éjecté un flux d'air secondaire canalisé par le conduit d'air secondaire 52, cette deuxième tuyère 56 présentant un deuxième bord de fuite 56.1. Selon une configuration, le premier bord de fuite 54.1 de la première tuyère 54 est décalé vers l'arrière par rapport au deuxième bord de fuite 56.1 de la deuxième tuyère 56.

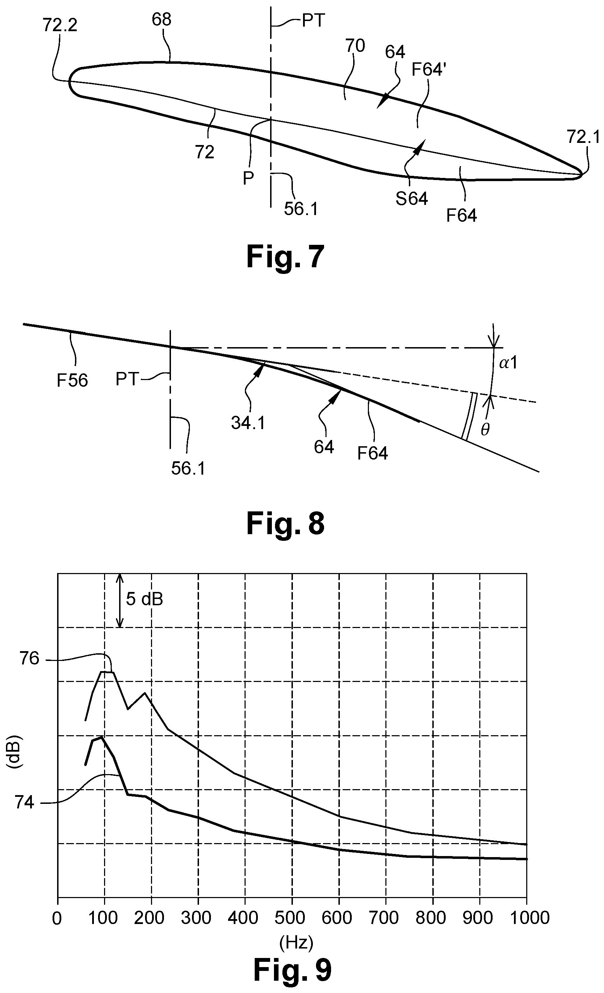

La deuxième tuyère 56 présente une face intérieure F56 qui s'étend jusqu'au deuxième bord de fuite 56.1 et forme un premier angle α1 avec une direction longitudinale parallèle à l'axe de motorisation A48, comme illustré sur la figure 8. La deuxième tuyère 56 présente un diamètre de sortie D56 ainsi qu'une superficie de sortie mesurés au niveau du deuxième bord de fuite 56.1.

En fonctionnement, les flux d'air sortant des première et deuxième tuyères 54, 56 forment un cône d'éjection C à l'arrière de l'ensemble de propulsion 42 dont l'angle augmente en s'écartant de ce dernier.

Chaque mât 44 comprend une structure primaire rigide, qui assure entre autres la transmission des efforts entre la motorisation 48 et la voilure 40, ainsi qu'une structure secondaire 58 qui enveloppe la structure primaire et limite la traînée du mât 44.

Cette structure secondaire 58 est sensiblement symétrique par rapport à un plan médian PM et s'étend entre un bord d'attaque 58.1 et un bord de fuite 58.2. Cette structure secondaire 58 comprend des parties droite et gauche, positionnées de part et d'autre du plan médian PM, comportant chacune un carénage avant droit ou gauche 60, positionné à l'avant de la voilure 40, qui s'étend à partir du bord d'attaque 58.1 ainsi qu'un carénage arrière droit ou gauche 62, appelé carénage aérodynamique arrière inférieur ou APF (« Aft Pylon Fairing » en anglais), positionné à l'arrière de la nacelle 50 qui s'étend jusqu'au bord de fuite 58.2 de la structure secondaire 58. Cette dernière s'étend dans le conduit d'air secondaire 52 entre la motorisation 48 et nacelle 50.

Bien entendu, l'invention n'est pas limitée à ce mode de réalisation pour l'aéronef et l'ensemble de propulsion 42. Quel que soit le mode de réalisation l'aéronef comprend une voilure 40 au moins un ensemble de propulsion 42 ainsi que, pour chaque ensemble de propulsion 42, un mât 44 pour relier l'ensemble de propulsion 42 à la voilure, l'ensemble de propulsion 42 comportant un axe de motorisation A48 ainsi qu'au moins une tuyère 56 qui présente un bord de fuite 56.1 et une face intérieure F56 inclinée par rapport à l'axe de motorisation A48 s'étendant jusqu'au bord de fuite 56.1, le mât 44 comportant au moins des carénages latéraux droit et gauche 62 positionnés de part et d'autre d'un plan médian PM. Selon une configuration, la structure secondaire 58 comprend des carénages arrière secondaires droit et gauche 64, 66, positionnés de part et d'autre de la structure secondaire 58, respectivement en saillie par rapport aux carénages latéraux droit et gauche 62. Les carénages arrière secondaires droit et gauche 64, 66 sont sensiblement symétriques par rapport au plan médian PM.

Ces carénages arrière secondaires droit et gauche sont configurés pour loger au moins un équipement d'un dispositif d'inversion de poussée, comme un système de guidage et de déplacement par exemple.

Selon une configuration, chaque carénage arrière secondaire droit ou gauche 64, 66 comprend une partie avant 68 décalée vers l'avant par rapport à un plan transversal PT contenant le deuxième bord de fuite 56.1 de la deuxième tuyère 56 ainsi qu'une partie arrière 70 décalée vers l'arrière par rapport au plan transversal PT.

Selon une configuration, les carénages arrière secondaires droit et gauche 64, 66 ne s'étendent pas au-delà du bord de fuite 58.2 de la structure secondaire 58 du mât 44.

Chaque carénage arrière secondaire droit ou gauche 64, 66 comprend une face inférieure F64 (orientée vers le sol lorsque l'aéronef est au sol), une face supérieure F64' opposée à la face inférieure F64) ainsi qu'une arête 72 reliant les faces inférieure et supérieure F64, F64'. L'arête 72 s'étend entre des extrémités arrière et avant 72.1, 72.2 situées au niveau du carénage latéral droit ou gauche 62. Selon une configuration, l'arête 72 s'écarte progressivement du carénage latéral droit ou gauche 62 à partir de l'extrémité arrière 72.1 jusqu'à un point écarté P (le plus écarté du carénage latéral droit ou gauche 62) puis, à partir de ce point écarté P, se rapproche progressivement du carénage latéral droit ou gauche 62 jusqu'à l'extrémité avant 72.2. Selon un agencement, le point écarté P est situé au niveau du plan transversal PT, au droit du deuxième bord de fuite 56.1 de la deuxième tuyère 56.

Selon une autre configuration, les carénages arrière secondaires droit et gauche 64, 66 s'étendent au-delà du bord de fuite 58.2 de la structure secondaire du mât 44. Selon cette configuration, les parties des carénages arrière secondaires droit et gauche 64, 66 décalées vers l'arrière par rapport au bord de fuite 58.2 de la structure secondaire 58 du mât 44 forment un unique carénage arrière secondaire qui comprend une face inférieure F64, une face supérieure F64', deux arêtes reliant les faces inférieure et supérieure F64, F64', symétriques par rapport au plan médian PM, présentant une extrémité arrière 72.1 commune, située au niveau du plan médian PM.

Quel que soit le mode de réalisation, le mât 44 comprend au moins un carénage arrière secondaire 64 comportant, décalées vers l'arrière par rapport au deuxième bord de fuite 56.1 de la deuxième tuyère 56, une face inférieure F64, une face supérieure F64' ainsi qu'au moins une arête 72 reliant les faces inférieure et supérieure F64, F64' qui présente une extrémité arrière 72.1, la plus proche du plan médian PM et la plus écartée du deuxième bord de fuite 56.1 de la deuxième tuyère 56, et un point écarté P situé au niveau du deuxième bord de fuite 56.1 de la deuxième tuyère 56.

Chaque carénage arrière secondaire 64, 66 présente une largeur E correspondant à une distance séparant le point écarté P et le carénage latéral droit ou gauche 62, une longueur en déport L correspondant à une distance séparant l'extrémité arrière 72.1 et le deuxième bord de fuite 56.1 de la deuxième tuyère 56 ainsi qu'une superficie S64 correspondant à la superficie de la face inférieure F64 décalée vers l'arrière par rapport au deuxième bord de fuite 56.1 de la deuxième tuyère 56, en contact avec le flux d'air secondaire sortant de la deuxième tuyère 56.

Selon une caractéristique de l'invention, la face inférieure F64 de chaque carénage arrière secondaire 64, 66 forme avec la face intérieure F56 de la deuxième tuyère 56 un angle θ compris entre 2 et 20°, de préférence supérieur à 5°, de l'ordre de 12°, l'angle entre la face inférieure F64 de chaque carénage arrière secondaire 64, 66 et la direction longitudinale étant supérieur à l'angle α1 entre la face intérieure F56 de la deuxième tuyère 56 et la direction longitudinale, comme illustré sur la figure 8. Ainsi, chaque carénage arrière secondaire 64, 66 forme un déflecteur qui interfère avec le cône d'éjection C des gaz sortant de l'ensemble de propulsion 42 de manière à l'écarter du bord de fuite 40.2 de la voilure 40, comme illustré sur la figure 4. Cette solution permet de réduire les bruits d'origine aérodynamique susceptibles d'apparaître en raison de l'interaction du bord de fuite 40.2 de la voilure 42 et du cône d'éjection C des gaz sortant de l'ensemble de propulsion 42.

Comme illustré sur la figure 9, une première courbe 74 de mesure des bruits d'origine aérodynamique en présence d'au moins un carénage arrière secondaire 64, 66 interférant avec le cône d'éjection C des gaz sortant de l'ensemble de propulsion 42 est décalée vers le bas par rapport à une deuxième courbe 76 de mesure des bruits d'origine aérodynamique en présence d'au moins un carénage arrière secondaire 64, 66 n'interférant pas avec le cône d'éjection C des gaz sortant de l'ensemble de propulsion 42. A titre indicatif, le fait de prévoir au moins un carénage arrière secondaire 64, 66 qui interfère avec le flux d'air secondaire permet d'obtenir une réduction du niveau sonore de l'ordre de 5 dB pour les fréquences sonores générant les niveaux sonores les plus élevés.

Selon une autre particularité, la longueur en déport L de chaque carénage arrière secondaire 64, 66 est comprise entre 25 et 100% du diamètre de sortie D56 de la deuxième tuyère 56. Selon une configuration, la longueur en déport L est sensiblement égale à 50% du diamètre de sortie D56 de la deuxième tuyère 56. Selon un mode de réalisation, un carénage arrière secondaire 64, 66 conforme à l'invention présente une longueur en déport L augmentée de l'ordre de 50% par rapport à celle d'un carénage arrière secondaire de l'art antérieur.

Selon une autre particularité, la superficie S64 de la face inférieure F64 de chaque carénage arrière secondaire 64, 66 est comprise entre 2 et 10% de la superficie de sortie de la deuxième tuyère 56. Selon une configuration, la superficie S64 de la face inférieure F64 de chaque carénage arrière secondaire 64, 66 est sensiblement égale à 4% de la superficie de sortie de la deuxième tuyère 56.

Selon une autre particularité, la largeur E de chaque carénage arrière secondaire 64, 66 est comprise entre 4 à 20% du diamètre de sortie D56 de la deuxième tuyère 56. Selon une configuration, la largeur E est sensiblement égale à 11% du diamètre de sortie D56 de la deuxième tuyère 56.

## Revendications

1. Aéronef comprenant une voilure (40), au moins un ensemble de propulsion (42) ainsi que, pour chaque ensemble de propulsion (42), un mât (44) reliant l'ensemble de propulsion (42) et la voilure (40), l'ensemble de propulsion (42) comportant un axe de motorisation (A48) ainsi qu'au moins une tuyère (56) qui présente un bord de fuite (56.1) et une face intérieure (F56) s'étendant jusqu'au bord de fuite (56.1) et inclinée par rapport à l'axe de motorisation (A48), le mât (44) comportant au moins des carénages latéraux droit et gauche (62) positionnés de part et d'autre d'un plan médian (PM) ainsi qu'au moins un carénage arrière secondaire (64) comportant, décalées vers l'arrière par rapport au bord de fuite (56.1) de la tuyère (56), une face inférieure (F64), une face supérieure (F64') ainsi qu'au moins une arête (72) reliant les faces inférieure et supérieure (F64, F64'), qui présente une extrémité arrière (72.1) et un point écarté (P) du plan médian (PM) situé au niveau du bord de fuite (56.1) de la tuyère (56) ; **caractérisé en ce que** l'ensemble de propulsion (42) comprend en outre un dispositif d'inversion de poussée, la face inférieure (F64) du carénage arrière secondaire (64) formant avec la face intérieure (F56) de la tuyère (56) un angle (θ) compris entre 2 et 20°, la face inférieure (F64) du carénage arrière secondaire (64) et l'axe de motorisation (A48) formant un angle supérieur à celui formé entre la face intérieure (F56) de la tuyère (56) et l'axe de motorisation (A48) et **en ce que** chaque carénage arrière secondaire (64) est configuré pour loger au moins un équipement du dispositif d'inversion de poussée.

2. Aéronef selon la revendication précédente, **caractérisé en ce que** l'angle formé entre la face inférieure (F64) du carénage arrière secondaire (64) et la face intérieure (F56) de la tuyère (56) est de l'ordre de 12°.

3. Aéronef selon l'une des revendications précédentes, **caractérisé en ce que** le mât (44) comprend des carénages arrière secondaires droit et gauche (64, 66) respectivement en saillie par rapport aux carénages latéraux droit et gauche (62).

4. Aéronef selon l'une des revendications précédentes, **caractérisé en ce que** la tuyère (56) présente un diamètre de sortie (D56) mesuré au niveau du bord de fuite (56.1) et **en ce que** chaque carénage arrière secondaire (64, 66) présente une longueur en déport (L), correspondant à une distance séparant l'extrémité arrière (72.1) et le bord de fuite (56.1) de la tuyère (56), comprise entre 25 et 100% du diamètre de sortie (D56) de la tuyère (56).

5. Aéronef selon la revendication précédente, **caractérisé en ce que** la longueur en déport (L) est sensiblement égale à 50% du diamètre de sortie (D56) de la tuyère (56).

6. Aéronef selon l'une des revendications précédentes, **caractérisé en ce que** la tuyère (56) présente un diamètre de sortie (D56) mesuré au niveau du bord de fuite (56.1) et **en ce que** chaque carénage arrière secondaire (64, 66) présente une largeur (E) comprise entre 4 à 20% du diamètre de sortie (D56) de la tuyère (56).

7. Aéronef selon la revendication précédente, **caractérisé en ce que** la largeur (E) est sensiblement égale à 11% du diamètre de sortie (D56) de la tuyère (56).

8. Aéronef selon l'une des revendications précédentes, **caractérisé en ce que** la tuyère (56) présente une superficie de sortie mesurée au niveau du bord de fuite (56.2) et **en ce que** la face inférieure (F64) de chaque carénage arrière secondaire (64, 66) présente une superficie (S64) comprise entre 2 et 10% de la superficie de sortie de la tuyère (56).

9. Aéronef selon la revendication précédente, **caractérisé en ce que** la superficie (S64) de la face inférieure (F64) de chaque carénage arrière secondaire (64, 66) est sensiblement égale à 4% de la superficie de sortie de la tuyère (56).

## Patentansprüche

1. Luftfahrzeug mit einem Flügel (40), wenigstens einer Antriebseinheit (42) sowie, für jede Antriebseinheit (42), einem Mast (44), der die Antriebseinheit (42) und den Flügel (40) verbindet, wobei die Antriebseinheit (42) eine Antriebsachse (A48) sowie wenigstens eine Düse (56) aufweist, die eine Abströmkante (56.1) und eine Innenseite (F56) aufweist, die sich bis zur Abströmkante (56.1) erstreckt und zur Triebwerksachse (A48) geneigt ist, wobei der Mast (44) wenigstens eine rechte und eine linke Seitenverkleidung (62) aufweist, die beidseits einer Mittelebene (PM) angeordnet sind, sowie wenigstens eine sekundäre hintere Verkleidung (64), die in Bezug auf die Abströmkante (56.1) der Düse (56) eine Unterseite (F64), eine Oberseite (F64') sowie wenigstens eine die Unter- und Oberseite (F64, F64') verbindende Kante (72) aufweist, die ein hinteres Ende (72.1) und einen von der Mittelebene (PM) beabstandeten Punkt (P) umfasst, der sich im Bereich der Abströmkante (56.1) der Düse (56) befindet, **dadurch gekennzeichnet, dass** die Antriebseinheit (42) außerdem eine Schubumkehrvorrichtung aufweist, wobei die Unterseite (F64) der sekundären hinteren Verkleidung (64) mit der Innenseite (F56) der Düse (56) einen Winkel (θ) zwischen 2 und 20° bildet und wobei die Unterseite (F64) der sekundären hinteren Verkleidung (64) und die Triebwerksachse (A48) einen Winkel bilden, der größer als der zwischen der Innenseite (F56) der Düse (56) und der Triebwerksachse (A48) gebildete Winkel ist, und dass jede sekundäre hintere Verkleidung (64) so eingerichtet ist, dass sie wenigstens eine Einrichtung der Schubumkehrvorrichtung aufnimmt.

2. Luftfahrzeug nach dem vorhergehenden Anspruch, **dadurch gekennzeichnet, dass** der Winkel zwischen der Unterseite (F64) der sekundären hinteren Verkleidung (64) und der Innenseite (F56) der Düse (56) in der Größenordnung von 12° liegt.

3. Luftfahrzeug nach einem der vorhergehenden Ansprüche, **dadurch gekennzeichnet, dass** der Mast (44) eine rechte und eine linke sekundäre hintere Verkleidung (64, 66) umfasst, die jeweils über die rechte und die linke Seitenverkleidung (62) hinausragen.

4. Luftfahrzeug nach einem der vorhergehenden Ansprüche, **dadurch gekennzeichnet, dass** die Düse (56) einen Austrittsdurchmesser (D56) aufweist, der an der Abströmkante (56.1) gemessen wird, und dass jede sekundäre hintere Verkleidung (64, 66) eine Überhanglänge (L) aufweist, die einem Abstand zwischen dem hinteren Ende (72.1) und der Abströmkante (56.1) der Düse (56) entspricht und die zwischen 25 und 100% des Austrittsdurchmessers (D56) der Düse (56) liegt.

5. Luftfahrzeug nach dem vorhergehenden Anspruch, **dadurch gekennzeichnet, dass** die Überhanglänge (L) im Wesentlichen gleich 50% des Austrittsdurchmessers (D56) der Düse (56) ist.

6. Luftfahrzeug nach einem der vorhergehenden Ansprüche, **dadurch gekennzeichnet, dass** die Düse (56) einen Austrittsdurchmesser (D56) aufweist, der an der Abströmkante (56.1) gemessen wird, und dass jede sekundäre hintere Verkleidung (64, 66) eine Breite (E) aufweist, die zwischen 4 und 20% des Austrittsdurchmessers (D56) der Düse (56) liegt.

7. Luftfahrzeug nach dem vorhergehenden Anspruch, **dadurch gekennzeichnet, dass** die Breite (E) im Wesentlichen gleich 11% des Austrittsdurchmessers (D56) der Düse (56) ist.

8. Luftfahrzeug nach einem der vorhergehenden Ansprüche, **dadurch gekennzeichnet, dass** die Düse (56) eine Austrittsfläche aufweist, die an der Abströmkante (56.2) gemessen wird, und dass die Unterseite (F64) jeder sekundären hinteren Verkleidung (64, 66) eine Fläche (S64) aufweist, die zwischen 2 und 10% der Austrittsfläche der Düse (56) liegt.

9. Luftfahrzeug nach dem vorhergehenden Anspruch, **dadurch gekennzeichnet, dass** die Fläche (S64) der Unterseite (F64) jeder sekundären hinteren Verkleidung (64, 66) im Wesentlichen gleich 4% der Austrittsfläche der Düse (56) ist.

## Claims

1. Aircraft comprising a wing (40), at least one propulsion assembly (42) and, for each propulsion assembly (42), a pylon (44) connecting the propulsion assembly (42) and the wing (40), the propulsion assembly (42) comprising an engine axis (A48) and at least one nozzle (56) which has a trailing edge (56.1) and an inner face (F56) extending to the trailing edge (56.1) and inclined with respect to the engine axis (A48), the pylon (44) comprising at least right and left lateral fairings (62) positioned on either side of a median plane (PM) and at least one secondary rear fairing (64) comprising, offset rearward with respect to the trailing edge (56.1) of the nozzle (56), a lower face (F64), an upper face (F64') and at least one edge (72) connecting the lower and upper faces (F64, F64'), which has a rear end (72.1) and a point (P) spaced apart from the median plane (PM) that is situated at the trailing edge (56.1) of the nozzle (56); **characterized in that** the propulsion assembly (42) comprises in addition a thrust reversal device, the lower face (F64) of the secondary rear fairing (64) forming with the inner face (F56) of the nozzle (56), an angle (θ) of between 2 and 20°, the lower face (F64) of the secondary rear fairing (64) and the engine axis (A48) forming an angle greater than that formed between the inner face (F56) of the nozzle (56) and the engine axis (A48), and wherein each secondary rear fairing (64) is configured to house at least one piece of equipment of the thrust reversal device.

2. Aircraft as claimed in the preceding claim, wherein the angle formed between the lower face (F64) of the secondary rear fairing (64) and the inner face (F56) of the nozzle (56) is of the order of 12°.

3. Aircraft as claimed in either of the preceding claims, wherein the pylon (44) comprises right and left secondary rear fairings (64, 66) respectively projecting with respect to the right and left lateral fairings (62).

4. Aircraft as claimed in one of the preceding claims, wherein the nozzle (56) has an outlet diameter (D56) measured at the trailing edge (56.1), and wherein each secondary rear fairing (64, 66) has an offset length (L), corresponding to a distance separating the rear end (72.1) and the trailing edge (56.1) of the nozzle (56), of between 25 and 100% of the outlet diameter (D56) of the nozzle (56).

5. Aircraft as claimed in the preceding claim, wherein the offset length (L) is substantially equal to 50% of the outlet diameter (D56) of the nozzle (56).

6. Aircraft as claimed in one of the preceding claims, wherein the nozzle (56) has an outlet diameter (D56) measured at the trailing edge (56.1), and wherein each secondary rear fairing (64, 66) has a width (E) of between 4 and 20% of the outlet diameter (D56) of the nozzle (56).

7. Aircraft as claimed in the preceding claim, wherein the width (E) is substantially equal to 11% of the outlet diameter (D56) of the nozzle (56).

8. Aircraft as claimed in one of the preceding claims, wherein the nozzle (56) has an outlet area measured at the trailing edge (56.2), and wherein the lower face (F64) of each secondary rear fairing (64, 66) has an area (S64) of between 2 and 10% of the outlet area of the nozzle (56).

9. Aircraft as claimed in the preceding claim, wherein the area (S64) of the lower face (F64) of each secondary rear fairing (64, 66) is substantially equal to 4% of the outlet area of the nozzle (56).
